# EUROPEAN PATENT APPLICATION

(11) **EP 1 338 938 A1**
(43) Date of publication of application: **27.08.2003**
(21) Application number: 02290449.4
(22) Date of filing: 22.02.2002
(51) Int. Cl.: G06F 1/00

(54) **Protection against unauthorised execution of a program on an IC card**

(71) Applicant: SCHLUMBERGER Systèmes, 92120 Montrouge (FR)
(72) Inventor: Lambert, Jean-Marc, c/o Schlumberger Systèmes, 92542 Montrouge Cédex (FR)
(74) Representative: den Braber, Gerard Paul

(57) **Abstract**

A method of controlling the use of an application. The application is capable of being executed on a portable object (SC. The method is characterized in that the method comprises the following steps:
- a requesting step (REQ), in which a licence request is sent to a licensing remote server LRS ;
- a sending step (SEN), in which the licensing remote server (LRS) sends a token TK to the portable object (SC);
- a validating step (VAL2), in which the token (TK) is checked so as to determine whether the token is valid or not; and
- if the token (TK) is not valid, in an application-aborting step (ABO2), the execution of the application is aborted.

## Description

### FIELD OF THE INVENTION

The invention concerns a method of controlling the use of an application provided on a portable object. The portable object can be, for example, a Subscriber Identity Module ("SIM"), a smart card, a cell phone or any portable object capable of executing a program written in a computer language.

### BACKGROUND OF THE INVENTION

Applications are generally preloaded on the portable object during a personalization step. Due to the lack of standards in the distribution scheme, it is difficult to get them onboard later on. These preloaded applications are specific to a particular portable object. During the personalization step, these applications must be checked on each portable object.

In the context of cards and mobile, the standardisation of the infrastructure leads to more openness. It is then possible to load an application on a portable object without control of its developer or owner.

### SUMMARY OF THE INVENTION

It is an object of the invention to allow a better control of the use of an application capable of being executed on a portable object.

According to one aspect of the invention, a method of controlling the use of an application capable of being run on a portable object (SC), is characterized in that the method comprises the following steps:
- a requesting step (REQ), in which a licence request is sent to a licensing remote server (LRS) ;
- a sending step (SEN), in which the licensing remote server (LRS) sends a token (TK) to the portable object (SC);
- a validating step (VAL2), in which the token (TK) is checked so as to determine whether the token is valid or not; and
- if the token (TK) is not valid, in an application-aborting step (ABO2), the running of the application is aborted.

An application cannot run without the presence of a valid token. The owner of the application can therefore control the use of the application, even if the application has been delivered via an open framework. The invention thus allows, for example, pay-per-use applications, wherein a licence needs to be purchased in order to use the application in a certain fashion.

These and other aspects of the invention will be described in greater detail hereinafter with reference to drawings.

### BRIEF DESCRIPTION OF THE DRAWINGS

- Figure 1 illustrates a system using the method according to the invention;
- Figure 2 illustrates a structure of a portable object;
- Figure 3 illustrates a structure of an application; and
- Figure 4 illustrates the different steps of the method according to the invention.

### DETAILED DESCRIPTION

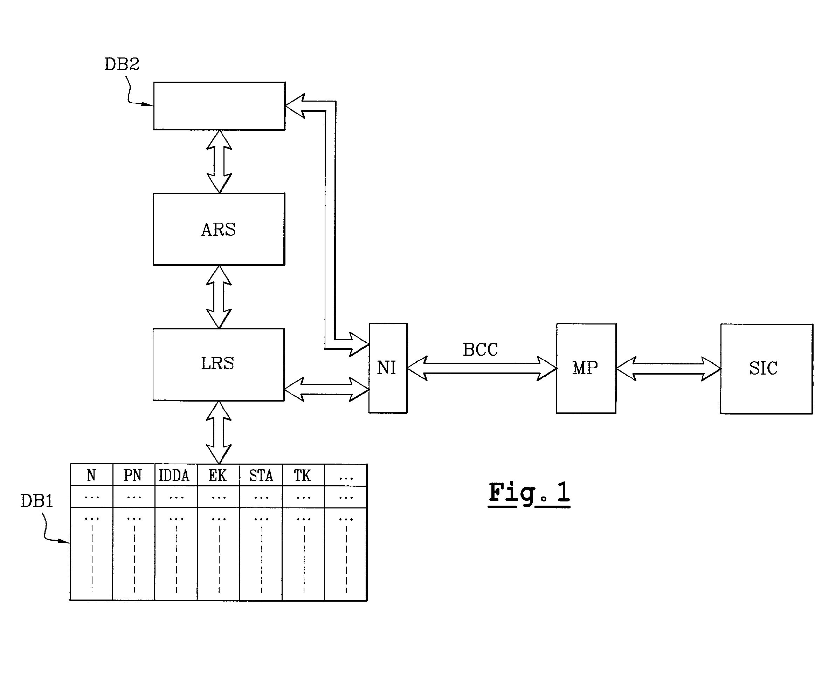

FIG. 1 shows a SIM card SIC associated with a cell phone MP. The SIM card SIC and the cell phone MP are used by an end user. The SIM card SIC associated with the cell phone MP are in relation with a licensing remote server LRS and an application remote server ARS. The licensing remote server LRS and the application remote server ARS are in relation with the SIM card SIC associated to the cell phone MP through a bi-directional communication channel BCC. This bi-directional communication channel BCC can be, for example, a Short Message Service ("SMS"), a General Packet Radio Service ("GPRS"), an Internet Protocol ("IP"), infrared or any other bi-directional communication channel.

The licensing remote server LRS and the application remote server ARS are in relation with respectively a first database DB1 and a second database DB2.

The first database DB1 comprises a plurality of data related to different users. For each user the database comprises, for example, the name N of the user, the phone number PN, an identification data IDDA related to an application which is on the cell phone MP associated with the SIM card SIC of the user. The first database DB1 further comprises an encryption key EK, a status STA concerning an application used by the user and an area for storing a licence token TK. The first database DB1 may also comprise any other elements concerning the user, the different applications he uses and the SIM card SIC associated with the mobile phone MP. The licensing remote server LRS and the application remote server ARS communicate to the cell phone MP associated with the SIM card SIC via the bi-directional communication channel through a network interface NI.

The second database DB2 comprises a plurality of applications.

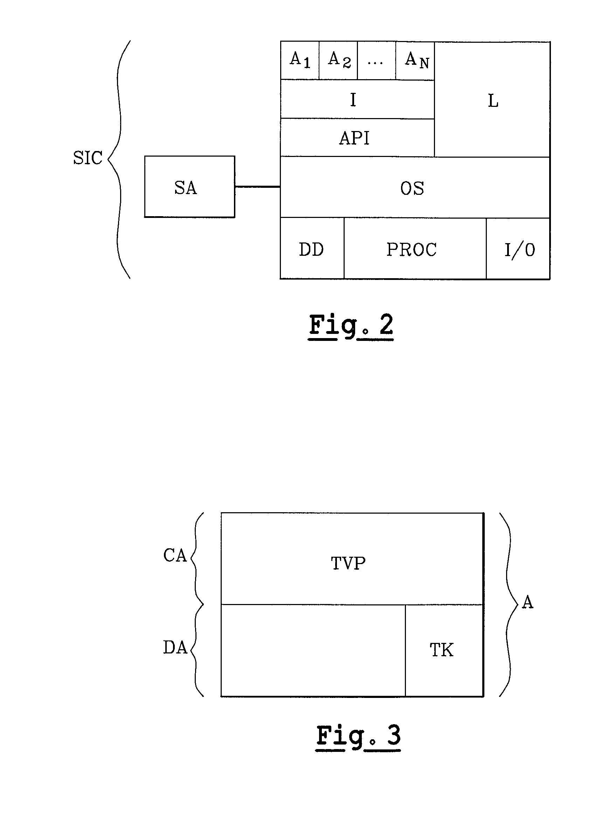

FIG.2 shows more details of the SIM card SIC. The SIM card SIC comprises a processor PROC, an interface device I/O for the input or output of data and a data area DD comprising identification elements related to the SIM card SIC and its owner. These identification elements comprise, for example, the Integrated Circuit Card IDentification number ICCID and the name N of the user. The SIM card SIC further comprises an operating system OS and an application interpreter I. The application interpreter I is in relation with a plurality of application program interface APIs, for example, functions or classes. The application interpreter I is also in relation with a plurality of applications A1, A2,.. AN to be executed. These applications A1, ... An can use the different applications program interface API through the application interpreter I. The SIM card SIC also comprises a storage area SA, which can be accessed through the application program interface API. The access right to that storage area SA is managed by the operating system OS.

FIG. 3 illustrates the structure of an application A. The application A comprises a code area CA and a data area DA. The data area DA comprises data related to the application A and an area for storing at least one token TK. The code area CA comprises code, in particular at least one specific token-validating program TVP.

The token TK is a data that has a specific value. The value is, for example, related to an identification of the SIM card SIC, or to an identification of the application that can run on the SIM card SIC, or both identifications. The value of the token TK can further be related to a certain type of licence. Thus the value of the token TK may be a function of, for example, the identification of the SIM card SIC, the identification of the application and the type of licence.

A token TK can therefore only be used on the specific SIM card SIC it is computed for. Let it be assumed, for example, that for a given application there are 3 different licence types. For each licence type there is a different token TK. The given application can be, for example, a weather forecast application. For example, the end user can then choose between three types of licence. A first licence type offering a one-day forecast, a second licence type offering a three-day forecast and a third licence type offering a one-day forecast for a one-month period. Three different token TK will thus be associated with this weather forecast application. We can also imagine that the application comprises different services, for example, a weather forecast service and a game service. For each service, different types of licence can be associated.

For example, let it be assumed that for a given application A there are three different tokens TK. The SIM card SIC may comprise, for example, a specific token-validating program TVP for each token TK. Alternatively, the SIM card SIC may comprise a unique token-validating program TVP that is capable of checking the validity of the three different token TK. A token validating program TVP is advantageously stored in the code area CA of the application A.

Advantageously, a token TK is encrypted through an encrypting key. And the token TK can be decrypted only through a decrypting key.

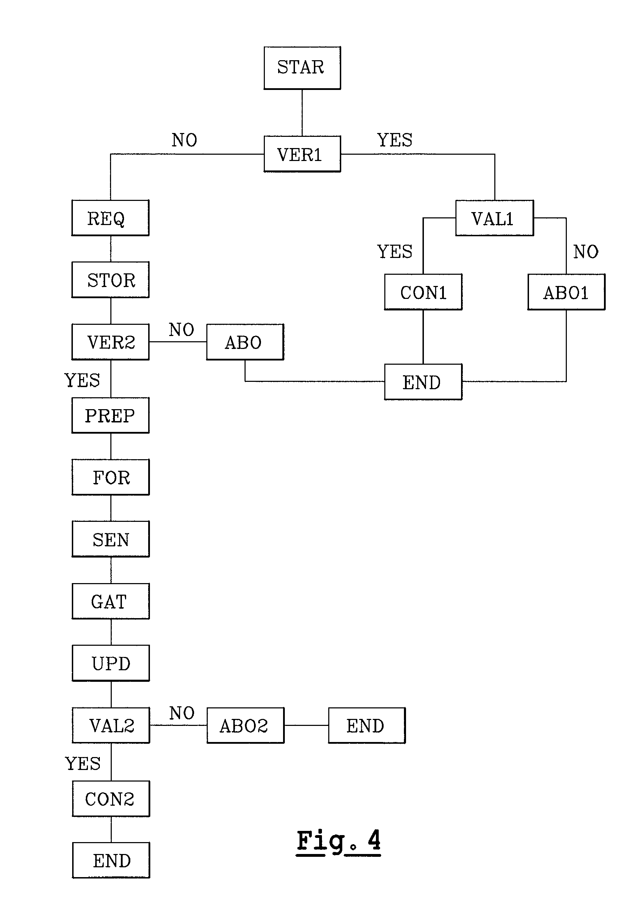

FIG. 4 shows the different steps of the method according to the invention.

In a starting step STAR, an application loaded on the SIM card SIC is started. In a token-verifying step VER1, the application verifies whether a token TK associated to the application is present or not. The token TK may be stored, for example, in the data area DA of the application. Alternatively, the token TK may be stored in a specific file F located on the SIM card SIC. Such a file F may comprise a plurality of tokens TK. Alternatively, each token may be stored in a different file.

If a token TK is present, in a first validating step VAL1, the application verifies if the token TK is valid.

If the token TK is encrypted, the application first decrypts the token TK. Subsequently, the application checks the validity of the token TK by means of the corresponding token-validating program TVP.

Let it be assumed, for example, that the application comprises different services, for example, a weather forecast service and a game service. Let further suppose that the weather forecast service is paid by Mr. Nobody, for a time period ranging from a date T1 to a date T2. Let us further suppose that the game service is paid by Mr. Nobody, for a time period ranging from a date T3 to a date T4. These parameters (T1,T2,T3,T4,Mr. Nobody) are contained in the token TK. At a present time T, the token-validating program TVP will extract these different parameters (T1,T2,T3,T4, Mr. Nobody) from the token TK. The token-validating program TVP then compares these parameters (T1,T2,T3,T4, M. Nobody) with, for example, the present time T and the identification elements stored in the data area DD. The data area DD comprises identification elements related to the SIM card SIC and its owner. The application can thus check the validity of the token TK.

If the present token TK is valid, in a first continuing step CON1 the application continues to run. If the present token TK is not valid, in an application-aborting step ABO1, the running of the application is aborted.

If no token TK is present in the application, in a requesting step REQ, a licence request is sent to the licensing remote server LRS to require a token TK. The licence request REQ can be made by a specific application different from the application to be run, by direct human interface request or by means of a specific file F comprising different tokens TK. This file F can be located on the SIM card SIC. The licence request includes the identification elements related to the SIM card SIC and its owner, which elements are comprised in the data area DD as shown in figure 2.

The licensing remote server LRS effects certain steps in response to the licence request:
- in a storing step STOR, the licensing remote server LRS stores the identification elements, which are included in the licence request, in the first database DB1;
- in a licence-verifying step VER2, the licensing remote server LRS verifies that the user claiming for a licence is authorized to do so. This can be done, for example, by means of the user-related data included in the first database DB1 and the identification elements;
- if the verification is not positive, the request procedure is aborted in a request-aborting step ABO. The licensing remote server LRS can then send a message for indicating that the procedure is aborted to the SIM card SIC;
- if the verification is positive the licensing remote server LRS prepares the token TK in a preparing step PREP. For example, in this step the token TK is encrypted through the encryption key EK. The token TK can thus be decrypted only by using a decrypting key;
- in a formatting step FOR, the licensing remote server LRS formats a response comprising the token TK;
- in a sending step SEN, the licensing remote server LRS sends the response to the SIM card SIC for storage. The token included in the response is stored in the specific file F and/or in the data area DA of the current application being executed;
- in a confirmation step GAT, the licensing remote server LRS receives an acknowledgement from the SIM card SIC that the response has been well-received;
- in an updating step UPD, the licensing remote server LRS updates the first database DB1. The licence distribution shows the number of tokens TK having already been deployed and the type of these deployed tokens TK.

The SIM card SIC receives the response comprising the token TK from the licensing remote server LRS. In a validating step VAL2, the application checks the received token TK to know whether the token is valid or not. The received token TK is decrypted by means of a decrypting key located on the SIM card SIC. A token-validating program TVP checks whether the received token TK is valid or not.

If the received token TK is valid, in a second continuing step CON2, the application can continue to run. If the received token TK is not valid, in a second application-aborting step ABO2 the running of the application is aborted.

In the above mentioned mode of realization, the application to be run was already loaded on the SIM card SIC. But if the application to be run is not loaded on the SIM card SIC, the application can be downloaded from the second database DB2 of the application remote server ARS. The application remote server ARS then sends the requested application to the SIM card SIC. The application remote server ARS can also send a request to the licensing remote server LRS for sending a token TK from the licensing remote server LRS to the SIM card SIC. The request can also be made from the SIM card SIC.

The application interpreter I can also be loaded from the application remote server ARS.

In another mode of realization, the application to be run can also be loaded from a specific card reader available, for example, at a sales outlet.

In another mode of realization, the licensing remote server LRS and the application remote server ARS can be a single remote server.

In the particular mode of realization, the applications were loaded on a SIM card associated with a cell phone MP. More generally the applications can be loaded on any portable object capable of running a program written in a computer language. Advantageously the computer language can be an object oriented language, in particular an object oriented language using an application interpreter. But the computer language can also be a compiled language. The portable object can be, for example, a smart card, a cell phone, or a personal digital assistant PDA.

Advantageously the token TK received from the licensing remote server LRS is located in the application and/or in the specific file F. But the token TK can be located elsewhere in the portable object SC.

In another mode of realization, there can be a temporary licence token. The token can furthermore contain configuration elements to activate or deactivate part of the application. Billing can be done on the licensing remote server LRS. The licensing scheme can be based on the database DB1.

In the above modes of realization, asymmetrical keys are used to encrypt or decrypt the token TK, that is a private encrypting key and a public decrypting key have been used, but symmetrical keys can also be used.

Finally, with the present invention an application can easily be delivered in an open framework. In addition a digital signature can be associated with the application, so as to allow authentication.

## Claims

1. A method of controlling the use of an application capable of being run on a portable object (SC), is **characterized in that** the method comprises the following steps:
- a requesting step (REQ), in which a licence request is sent to a licensing remote server (LRS) ;
- a sending step (SEN), in which the licensing remote server (LRS) sends a token (TK) to the portable object (SC) ;
- a validating step (VAL2), in which the token (TK) is checked so as to determine whether the token is valid or not; and
- if the token (TK) is not valid, in an application-aborting step (ABO2), the running of the application is aborted.

2. The method according to claim 1, **characterized in that** the portable object (SC) is a SIM card SIC.

3. The method according to claim 1, **characterized in that** the token (TK) is encrypted and **in that** the portable object (SC) decrypts the token (TK) before checking the validity of the token (TK).

4. The method according to claim 1, is **characterized in that** the requesting step (REQ) is preceded by a verifying step to check if the application is present on the portable object (SC) ; and if not to cause the portable object (SC) to download the application from an application remote server (ARS).
